# EUROPEAN PATENT APPLICATION

(11) **EP 4 776 453 A1**
(43) Date of publication of application: **15.07.2026**
(21) Application number: 26150570.5
(22) Date of filing: 07.01.2026
(51) Int. Cl.: H02H 1/06, H02H 3/04, H02H 11/00

(54) **ANTI-REVERSE PROTECTION CIRCUIT FOR DC SOCKET, ANTI-REVERSE PROTECTION ASSEMBLY, AND DC SOCKET**

(30) Priority: 08.01.2025 CN 202520045173 U
(71) Applicant: SCHNEIDER ELECTRIC INDUSTRIES SAS, 92500 Rueil-Malmaison (FR)
(72) Inventor: ZHANG, Youliang, Shenzhen 518000 (CN); ZHANG, Dahai, Shenzhen 518000 (CN); XIONG, Kun, Shenzhen 518000 (CN); LI, Xinyu, Shenzhen 518000 (CN); LIU, Jingyi, Shenzhen 518000 (CN); LI, Yun, Shenzhen 518000 (CN)
(74) Representative: Lavoix

(57) **Abstract**

An anti-reverse protection circuit (100) includes: an input side (1101, 1102); an output side (1201, 1202); a power supply circuit (130) including a control module (180) and a step-down circuit (190), where the control module is coupled to the input side and the step-down circuit; a unidirectional conduction circuit (140) coupled between the input side and the power supply circuit, and adapted to become closed when the wiring is reverse; and a normally closed switch arranged between the input side and the output side, and coupled to the power supply circuit. When the wiring is correct, the normally closed switch is in a conducting state to allow a circuit between the input side and the output side to be a conducting circuit, and when the external power supply is reversely wired and supplies power to the power supply circuit, the normally closed switch is opened to cut off the circuit between the input side and the output side.

Fig. 1

## Description

### FIELD

Example embodiments of the present disclosure generally relate to the field of electrical equipment, and in particular, to an anti-reverse protection circuit for a DC socket, an anti-reverse protection assembly, and a DC socket.

### BACKGROUND

With the widespread application of DC power supplies, DC sockets have become indispensable connecting components in various electronic devices and power systems. The DC socket may be configured to connect a DC power supply to an electrical device, to supply a stable direct current to the electrical device. However, existing DC sockets lack effective protection measures against reverse wiring, that is, they are not equipped with protection circuits for preventing the wiring errors of positive and negative poles.

### SUMMARY

An object of the present disclosure is to provide an anti-reverse protection circuit for a DC socket, an anti-reverse protection assembly, and a DC socket, to at least partially solve the above problems and/or other potential problems existing in the conventional DC socket.

In a first aspect of the present disclosure, an anti-reverse protection circuit for a DC socket is provided. The anti-reverse protection circuit includes: an input side adapted to be electrically connected to an external power supply; an output side adapted to be electrically connected to an external device; a power supply circuit including a control module and a step-down circuit, where the control module is coupled to the input side and the step-down circuit; a unidirectional conduction circuit coupled between the input side and the power supply circuit, and adapted to become open when the input side is correctly wired to the external power supply, to prevent the external power supply from supplying power to the power supply circuit, and adapted to become closed when the input side is reverse-wired to the external power supply, to allow the external power supply to supply power to the power supply circuit; and a normally closed switch arranged between the input side and the output side, and coupled to the step-down circuit of the power supply circuit. When the external power supply is correctly wired, the normally closed switch is adapted to be in a conducting state to allow a circuit between the input side and the output side to be a conducting circuit, and when the external power supply is reversely wired and supplies power to the step-down circuit of the power supply circuit, the normally closed switch is opened to cut off the circuit between the input side and the output side.

In embodiments according to the present disclosure, through coordinated operation of the input side, the output side, the power supply circuit, the unidirectional conduction circuit, and the normally closed switch, a wiring status of a DC power supply can be monitored in real time, and damage to the external device can be prevented, making it to be applicable to a variety of DC power supply scenarios. Other benefits will be described below in conjunction with corresponding embodiments.

In some embodiments, the input side includes a positive-pole input side and a negative-pole input side, and the output side includes a positive-pole output side and a negative-pole output side; and the unidirectional conduction circuit includes: an anode terminal coupled to the power supply circuit; and a cathode terminal coupled to the positive-pole input side.

In some embodiments, the input side includes a positive-pole input side and a negative-pole input side, and the output side includes a positive-pole output side and a negative-pole output side; and the unidirectional conduction circuit includes: an anode terminal coupled to the negative-pole input side; and a cathode terminal coupled to the power supply circuit.

In some embodiments, the input side includes a positive-pole input side and a negative-pole input side, and the output side includes a positive-pole output side and a negative-pole output side; and a first unidirectional conduction circuit of a pair of unidirectional conduction circuits includes: a first anode terminal coupled to the power supply circuit; and a first cathode terminal coupled to the positive-pole input side, and a second unidirectional conduction circuit of the pair of unidirectional conduction circuits includes: a second anode terminal coupled to the negative-pole input side; and a second cathode terminal coupled to the power supply circuit.

In some embodiments, the normally closed switch is coupled between the positive-pole input side and the positive-pole output side.

In some embodiments, a first terminal of the normally closed switch is coupled between the positive-pole input side and the positive-pole output side, and a second terminal of the normally closed switch is coupled between the negative-pole input side and the negative-pole output side.

In some embodiments, the normally closed switch includes a normally closed relay.

In some embodiments, the unidirectional conduction circuit includes a crystal diode.

In some embodiments, when the power supply circuit is powered, the control module regulates an output voltage of the step-down circuit.

In some embodiments, the control module includes: a switching transistor connected to the step-down circuit.

In some embodiments, the step-down circuit includes: an energy storage inductor, a first terminal of the energy storage inductor being connected to the switching transistor, and a second terminal of the energy storage inductor being connected to the output side; a freewheeling diode, a cathode terminal of the freewheeling diode being connected to the first terminal of the energy storage inductor, and an anode terminal of the freewheeling diode being grounded; and a filter capacitor, an end of the filter capacitor being connected to the second terminal of the energy storage inductor, and the other end of the filter capacitor being grounded.

In some embodiments, the power supply circuit further includes a feedback circuit coupled between the step-down circuit and the control module, and the feedback circuit includes a voltage-dividing resistor adapted to divide an output voltage of the step-down circuit and feed a voltage-dividing signal back to the control module.

In some embodiments, the power supply circuit further includes a compensation circuit coupled to the control module and adapted to compensate for a feedback signal of the feedback circuit.

In some embodiments, the step-down circuit is coupled to the normally closed switch through a crystal diode.

In some embodiments, the anti-reverse protection circuit further includes: a lamp driving circuit coupled to the step-down circuit, where a driving signal of the lamp driving circuit has a square-wave characteristic and is adapted to drive an indicator light to flash.

In a second aspect of the present disclosure, an anti-reverse protection assembly for a DC socket is provided. The anti-reverse protection assembly includes: the anti-reverse protection circuit of the first aspect; a wiring terminal coupled to the input side of the anti-reverse protection circuit; and a socket sleeve coupled to the output side of the anti-reverse protection circuit.

In some embodiments, the anti-reverse protection assembly further includes: an indicator light coupled to the step-down circuit of the power supply circuit of the anti-reverse protection circuit, and adapted to enter an on state when the input side of the anti-reverse protection circuit is reversely wired and the external power supply supplies power to the power supply circuit of the anti-reverse protection circuit.

In a third aspect of the present disclosure, a DC socket is provided. The DC socket includes: a housing; and the anti-reverse protection assembly of the second aspect coupled to the housing, and adapted to be electrically connected to an external device.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numerals represent the same or similar elements, where:
FIGS. 1 to 4 show schematic diagrams of an anti-reverse protection circuit according to some embodiments of the present disclosure;
FIG. 5 shows a schematic diagram of a power supply circuit according to some embodiments of the present disclosure;
FIG. 6 shows a schematic circuit diagram of a normally closed switch according to some embodiments of the present disclosure; and
FIG. 7 shows a schematic circuit diagram of an indicator light according to some embodiments of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms and should not be limited by embodiments set forth herein. Rather, these embodiments are provided for a more thorough and complete understanding of the present disclosure. It should be understood that the drawings and embodiments of the present disclosure are only used for illustrative purposes, and are not intended to limit the protection scope of the present disclosure.

In the description of embodiments of the present disclosure, the term "include" and the like should be understood as open-ended inclusion, that is, "including but not limited to". The term "based on" should be understood as "based at least in part on". The term "an embodiment" or "the embodiment" should be understood as "at least one embodiment". The term "some embodiments" should be understood as "at least some embodiments". Other explicit and implicit definitions may also be included below. The terms "first", "second", etc. may refer to different or identical objects. Other explicit and implicit definitions may also be included below.

As mentioned briefly above, existing DC sockets suffer from the problems of wiring errors with DC power supplies. Specifically, in practical use, a wiring error of a DC socket will result in abnormal operation or even damage to an electrical device (hereinafter also referred to as an external device below). For example, if an electronic device is not equipped with a reverse-wiring protection circuit inside, an input reverse voltage will damage circuit components, thereby affecting normal operation of the electric device. Secondly, in a case of reverse wiring, problems such as short circuit or overload of the circuit may be caused, further leading to circuit overheating, fusing, or other safety hazards. In addition, reverse wiring also affects the stability of the power supply system, resulting in the operational failures of the power supply system and even adverse chain reactions of the entire power supply network.

In order to solve or at least partially solve the above problems or other potential problems of the DC sockets in existing solutions, embodiments of the present disclosure provide an anti-reverse protection circuit for a DC socket, an anti-reverse protection assembly, and a DC socket. The anti-reverse protection circuit includes an input side, an output side, a power supply circuit, a unidirectional conduction circuit, and a normally closed switch. Further, the input side is adapted to be electrically connected to an external power supply. Further, the output side is adapted to be electrically connected to an external device. Further, the power supply circuit is coupled to the input side and includes a control module and a step-down circuit. The control module is coupled to the input side and the step-down circuit. Further, the unidirectional conduction circuit is coupled between the input side and the power supply circuit, and is adapted to become open when the input side is correctly wired to the external power supply, to prevent the external power supply from supplying power to the power supply circuit, and is adapted to become closed when the input side is reverse-wired to the external power supply, to allow the external power supply to supply power to the power supply circuit. Further, the normally closed switch is arranged between the input side and the output side, and is coupled to the step-down circuit of the power supply circuit. When the external power supply is correctly wired, the normally closed switch is adapted to be in a conducting state to allow a circuit between the input side and the output side to be a conducting circuit, and when the external power supply is reversely wired and supplies power to the step-down circuit of the power supply circuit, the normally closed switch is opened to cut off the circuit between the input side and the output side.

In this way, by configuring the power supply circuit and the unidirectional conduction circuit, the wiring status of the positive pole and negative pole of the external power supply can be identified quickly and accurately. If the external power supply is wired correctly, the unidirectional conduction circuit remains in an open-circuit state, and the external power supply does not supply power to the power supply circuit; if the external power supply is wired incorrectly, the unidirectional conduction circuit is in a conducting state, and the external power supply supplies power to the power supply circuit.

In addition, if the power supply circuit identifies that the external power supply is wired incorrectly, the normally closed switch is opened rapidly to cut off a current path between the input side and the output side, thereby preventing the erroneous current from flowing into the external device, and avoiding damage to the external device caused by overcurrent or reverse voltage. When the external power is wired correctly, the normally closed switch remains in a conducting state, ensuring an unobstructed circuit path between the input side and the output side. At this point, the current can be transmitted to the external device. The anti-reverse protection circuit has a simple structure, low cost, and stable operation performance. It has a fast response speed and reliable operation, and can maintain stable operation in complex DC power supply environments.

The anti-reverse protection circuit can avoid damage to the power system and the external device caused by wiring errors resulting from human factors or accidental causes, thereby improving the safety and reliability of the entire power supply system.

The following describes an example structure and an operational process of an anti-reverse protection assembly for a DC socket in an electronic device. Hereinafter, the concept of the present disclosure will be described mainly by taking a DC socket as an example. It should be understood that similar principles apply to other types of sockets, and no separate description will be provided hereinafter.

A DC socket according to embodiments of the present disclosure includes a housing and the anti-reverse protection assembly. The anti-reverse protection assembly is coupled to the housing. The anti-reverse protection assembly is configured to be electrically connected to an external device, and can realize identification of the reverse-wired power supply and provide safe protection for the external device. Embodiments of the present disclosure will be described in detail below in conjunction with the specific structure and functions of the DC socket.

Specifically, the housing serves as an external protection structure of the DC socket, and is configured to accommodate the anti-reverse protection assembly and provide mechanical strength and stability. The housing may be made of an insulating material (such as plastic or composite material) to ensure safety during operation. There is a space inside the housing for mounting and fixing the anti-reverse protection assembly. In addition, an outer surface of the housing is provided with jack interfaces to facilitate insertion of the external device.

Further, the anti-reverse protection assembly is disposed inside the housing. The anti-reverse protection assembly may receive the DC power from the external power supply and identify the wiring status of the external power supply. If the positive pole and negative pole of the external power supply are correctly wired, the anti-reverse protection assembly allows current to be transmitted from the input end to the output end, to provide a stable power supply for the external device. If the external power supply is wired incorrectly, the anti-reverse protection assembly cuts off the current path between the input end and the output end.

In this way, through the modular integration of the housing and the anti-reverse protection assembly, the DC socket can not only provide mechanical protection, but also prevent damage to external device caused by power wiring errors. The DC socket is applicable to a variety of DC power application scenarios, such as household appliances, industrial equipment, and vehicle-mounted devices, to provide a safe and reliable DC power supply for users.

Embodiments of the present disclosure will be described in detail below in conjunction with the specific structure and functions of the anti-reverse protection assembly. The anti-reverse protection assembly according to embodiments of the present disclosure includes an anti-reverse protection circuit 100, a wiring terminal, and a socket sleeve. The anti-reverse protection circuit 100, the wiring terminal, and the socket sleeve are integrated for automatic identification of the wiring status of the power supply and safe protection of the external device.

Specifically, the anti-reverse protection circuit 100 is configured to identify the wiring status of the positive pole and negative pole of the external power supply, and control the on-off state of the module according to the wiring status, so as to realize the quick judgment and response to the event of reverse-wired power supply, and prevent the damage to the external device caused by reverse wiring.

Further, the wiring terminal is disposed at the input side 110 of the anti-reverse protection circuit 100 and configured to be connected to the external power supply. The wiring terminal includes a positive-pole input terminal and a negative-pole input terminal, which are respectively coupled to a positive-pole input side 1101 and a negative-pole input side 1102 of the anti-reverse protection circuit 100 described below. Through the wiring terminal, the external DC power supply can be reliably input to the anti-reverse protection circuit 100, and the circuit can monitor and control the wiring status of the power supply.

Further, the socket sleeve is disposed at the output side 120 of the anti-reverse protection circuit 100 and configured to be connected to a plug of an external device. The socket sleeve includes a positive-pole output terminal and a negative-pole output terminal, which are respectively coupled to a positive-pole output side 1201 and a negative-pole output side 1202 of the anti-reverse protection circuit 100 described below. If the external power supply is wired correctly, the anti-reverse protection circuit 100 allows the current to pass through and supplies power to the external device through the socket sleeve; if the external power supply is wired incorrectly, the anti-reverse protection circuit 100 cuts off the current path between the input side 110 and the output side 120, and the socket sleeve no longer outputs the current, thereby preventing damage to the external device caused by reverse wiring.

In this way, the input electric energy is transmitted to the anti-reverse protection circuit 100 through the connection between the wiring terminal and the external power supply; and the current processed by the protection circuit is safely output to the external device through the connection between the socket sleeve and the external device. Therefore, real-time monitoring of the wiring status of the DC power supply can be effectively achieved, and protection measures can be rapidly taken in a case of incorrect wiring, thereby improving the safety and reliability of the DC power supply system.

In some embodiments, the anti-reverse protection assembly includes an indicator light 160, which is configured to provide a visual status indication when a wiring error of the power supply is detected, to enhance user experience and operational safety of the device.

Further, the positive terminal and the negative terminal of the indicator light 160 are respectively coupled to the power supply circuit 130 of the anti-reverse protection circuit 100. The indicator light 160 is configured to provide an intuitive error indication to the user when the positive pole and negative pole of the external power supply are reversely wired.

In a case where the positive pole and negative pole of the external power supply are correctly wired, that is, when the positive pole of the power supply is connected to the positive-pole input side 1101 and the negative pole of the power supply is connected to the negative-pole input side 1102, no current flows to the power supply circuit 130. At this point, the power supply circuit 130 does not supply a driving current to the indicator light 160, and the indicator light 160 remains in the off state. At this point, the anti-reverse protection circuit 100 allows the current path between the positive-pole input side 1101 and the positive-pole output side 1201, and the current path between the negative-pole input side 1102 and the negative-pole output side 1202, to be in a conducting state, and the electrical energy is normally transmitted to the external device.

If the positive pole and negative pole of the external power supply are wired incorrectly, that is, when the positive pole of the power supply is connected to the negative-pole input side 1102, and the negative pole of the power supply is connected to the positive-pole input side 1101, the current flows to the power supply circuit 130. The power supply circuit 130 identifies a wiring error and supplies a driving current to the indicator light 160, to light the indicator light 160 up. After entering an on state, the indicator light 160 can intuitively indicate the presence of the wiring error to the user, and alert the user to check and correct the wiring of the power supply. At the same time, the anti-reverse protection circuit 100 cuts off the current path between the input side 110 and the output side 120 to prevent the erroneous current from being transmitted to the external device. In some embodiments, when the power supply circuit 130 is turned on, the step-down circuit 190 outputs a stepped-down output voltage for a long time, for example, the output voltage is 12V. Meanwhile, in the case of reverse wiring, the indicator light 160 may adopt steady-on mode to alert the user.

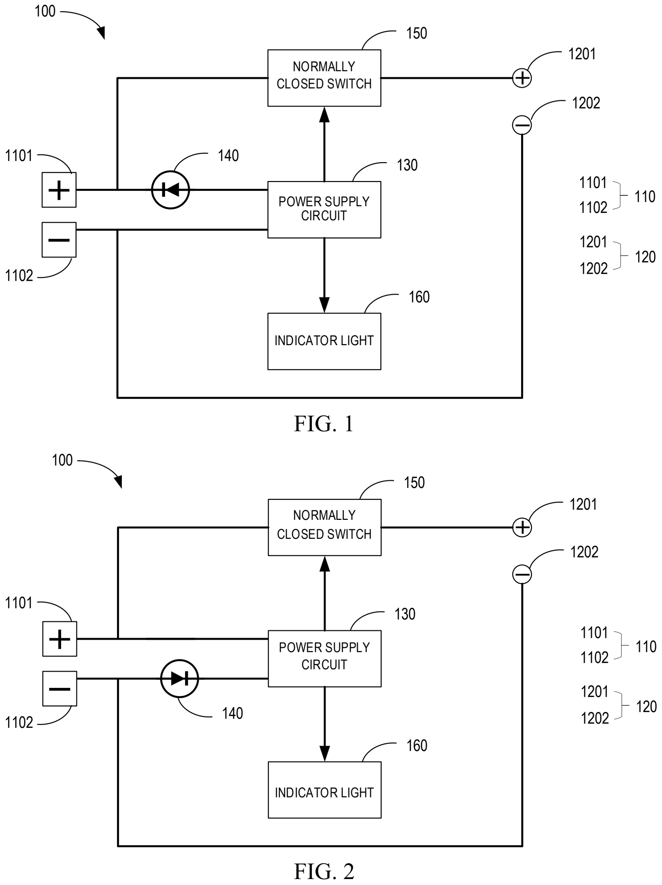

The specific structure of the anti-reverse protection circuit 100 will be described below in conjunction with FIGS. 1 to 4. FIGS. 1 to 4 show schematic diagrams of the anti-reverse protection circuit 100 according to some embodiments of the present disclosure. As shown in FIGS. 1 to 4, in embodiments of the present disclosure, the anti-reverse protection circuit 100 generally includes an input side 110, an output side 120, a power supply circuit 130, a unidirectional conduction circuit 140, and a normally closed switch 150. The anti-reverse protection circuit 100 can identify the wiring status of the positive pole and negative pole of the DC power supply, and cut off the current path to prevent damage to external device in a case of wiring error. Embodiments of the present disclosure are described in detail below in conjunction with the specific structure and function of each part.

Specifically, the input side 110 is configured to be connected to the external power supply. In some embodiments, the input side 110 includes a positive-pole input side 1101 and a negative-pole input side 1102. The input side 110 serves as a power access terminal of the anti-reverse protection circuit 100, and provides electric energy for a subsequent detection and protection function of the anti-reverse protection circuit 100 by receiving a current from the external DC power supply. For example, the voltage of the external power supply may be 48V.

Further, the output side 120 is configured to be connected to the external device. In some embodiments, the output side 120 includes a positive-pole output side 1201 and a negative-pole output side 1202. The electrical connection status of the output side 120 depends on the wiring status of the external power supply. If the external power supply is wired correctly, the output side 120 allows the current to flow to the external device normally; if the external power supply is wired incorrectly, the circuit path between the output side 120 and the input side 110 is cut off to prevent the transmission of erroneous current to the external device. The interface form of the output side 120 may be adapted according to specific application scenarios, for example, it can be adapted to an electric device such as a DC motor or a DC lamp.

Further, the power supply circuit 130 is coupled to the input side 110 and is configured to monitor the wiring status of the positive and negative poles of the power supply at the input side 110. The power supply circuit 130 can determine the wiring conditions of the positive and negative poles of the external power supply in real time, and send corresponding control signals to other components. Further, the power supply circuit 130 includes a control module 180 and a step-down circuit 190. The control module 180 is coupled to the input side 110 and the step-down circuit 190, and is configured to regulate an output voltage of the step-down circuit 190 in a case where the power supply circuit 130 is powered.

Further, the unidirectional conduction circuit 140 is disposed between the input side 110 and the power supply circuit 130, and is configured to control power supply of the power supply circuit 130 according to the wiring status of the positive and negative poles of the external power supply. If the external power supply is wired correctly, the unidirectional conduction circuit 140 is in an off state to serve as an open circuit, thus preventing the external power supply from supplying power to the power supply circuit 130 to ensure that the circuit of the DC socket operates normally. In contrast, when the input side 110 is reversely wired to the external power supply, the unidirectional conduction circuit 140 is in a conducting state, allowing the external power supply to supply power to the step-down circuit 190 of the power supply circuit 130, and the output voltage of the step-down circuit 190 is regulated by the control module 180. At this point, the power supply circuit 130 identifies the error state and triggers the protection mechanism. For example, the unidirectional conduction circuit 140 may adopt a diode or other unidirectional conduction device for unidirectional control of current.

Further, the normally closed switch 150 is coupled between the input side 110 and the output side 120 and is electrically connected to the step-down circuit 190 of the power supply circuit 130. If the external power supply is wired correctly, the power supply circuit 130 does not receive an fault signal, the normally closed switch 150 remains in a conducting state, a conduction path is formed between the input side 110 and the output side 120, and the current can be transmitted to the external device; if the external power supply is wired incorrectly, the power supply circuit 130 receives the fault signal and drives the normally closed switch 150 to open, cutting off the current path between the input side 110 and the output side 120, thereby cutting off the power supply in the case of wiring error and preventing erroneous current from entering the external device. For example, the normally closed switch 150 may employ a normally closed relay.

During operation, if the user correctly connects the positive and negative poles of the power supply to the input side 110, the unidirectional conduction circuit 140 blocks the external power supply from supplying power to the power supply circuit 130, the normally closed switch 150 remains in the conducting state, a conducting path is formed between the input side 110 and the output side 120, and the current is normally supplied to the external device. If the positive-pole input side 1101 and the negative-pole input side 1102 of the input side 110 are reversely connected to the positive and negative poles of the external power supply, the unidirectional conduction circuit 140 is in a conducting state, so that the power supply circuit 130 receives power from the external power supply and determines a wiring error, and controls the normally closed switch 150 to open the connection between the input side 110 and the output side 120, thereby cutting off the power transmission and preventing damage to the external device.

As shown in FIG. 1, in some embodiments, the positive-pole input side 1101 and the negative-pole input side 1102 of the input side 110 are configured to be connected to the positive pole and the negative pole of the external power supply, respectively, to receive DC electrical energy from the external power supply. Meanwhile, the positive-pole output side 1201 and the negative-pole output side 1202 of the output side 120 are configured to be connected to power input terminals of the external device, thereby supplying DC electrical energy to the external device.

Further, the unidirectional conduction circuit 140 includes an anode terminal and a cathode terminal. The unidirectional conduction circuit 140 is configured to assume different conducting states to ensure the safety of the external device depending on whether the external power supply is wired correctly or not.

Further, the anode terminal is coupled to the power supply circuit 130, and the cathode terminal is coupled to the positive-pole input side 1101 for receiving a voltage signal from the positive-pole input side 1101.

If the positive pole and the negative pole of the external power supply are correctly connected to the positive-pole input side 1101 and the negative-pole input side 1102, respectively, the voltage at the anode terminal of the unidirectional conduction circuit 140 is lower than that at the cathode terminal, and the unidirectional conduction circuit 140 remains in the off state, thereby preventing the power supply circuit 130 from obtaining power from the external power supply; at this point, the power supply circuit 130 does not trigger the protection measure, and the current of the input side 110 may be transmitted to the output side 120 through the normally closed switch 150 to supply power to the external device.

If the positive pole and negative pole of the external power supply are reversely wired, that is, when the positive pole is connected to the negative-pole input side 1102, and the negative pole is connected to the positive-pole input side 1101, the voltage at the anode terminal of the unidirectional conduction circuit 140 is higher than that at the cathode terminal, the unidirectional conduction circuit 140 is in a conducting state, and the current from the external power supply is transmitted to the power supply circuit 130. After obtaining power from the external power supply, the power supply circuit 130 identifies a wiring error, and controls the normally closed switch 150 to open the connection between the input side 110 and the output side 120, thereby cutting off power transmission and preventing damage to the external device.

As shown in FIG. 2, in some embodiments, the anode terminal of the unidirectional conduction circuit 140 is coupled to the negative-pole input side 1102; the cathode terminal is coupled to the power supply circuit 130.

If the positive and negative poles of the external power supply are wired correctly, the voltage at the anode terminal is lower than the voltage at the cathode terminal, the unidirectional conduction circuit 140 is in an off state, and the power supply circuit 130 cannot obtain power from the external power supply. At this point, the power supply circuit 130 does not trigger the protection measure, and the normally closed switch 150 remains in the conducting state, enabling a conducting path to be formed between the positive-pole input side 1101 and the positive-pole output side 1201, and a conducting path to be formed between the negative-pole input side 1102 and the negative-pole output side 1202, thereby supplying power to the external device.

If the positive and negative poles of the external power supply are reversely wired, that is, the positive pole is connected to the negative-pole input side 1102, and the negative pole is connected to the positive-pole input side 1101, the voltage at the anode terminal is higher than the voltage at the cathode terminal, the unidirectional conduction circuit 140 is in a conducting state, and the current from the external power supply is transmitted to the power supply circuit 130. After receiving the power supply, the power supply circuit 130 identifies a wiring error, and controls the normally closed switch 150 to open the connection between the input side 110 and the output side 120, thereby cutting off power transmission and preventing damage to the external device.

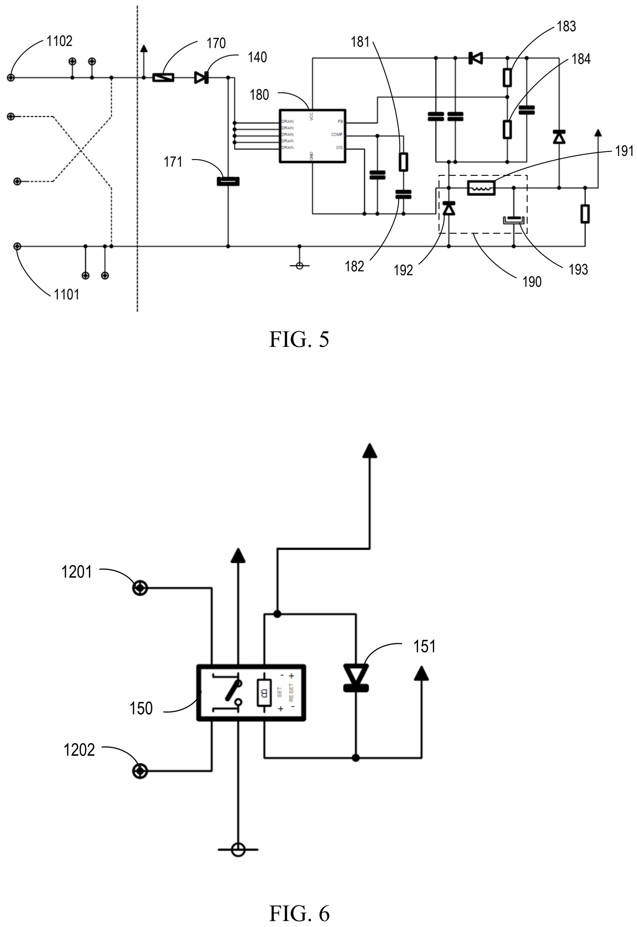

As shown in FIG. 5, in some embodiments, a fuse 170 may be arranged between the negative-pole input side 1102 and the unidirectional conduction circuit 140 for overcurrent protection. Meanwhile, a filter capacitor 171 is arranged between the cathode terminal of the unidirectional conduction circuit 140 and the positive-pole input side 1101 to reduce ripple and noise in the input voltage.

In some embodiments, the control module 180 includes a switching transistor, a control pin, and a feedback pin. The switching transistor is connected to an energy storage inductor 191 of the step-down circuit 190. The control module 180 achieves regulation of the output voltage of the step-down circuit 190 by controlling on and off of the switching transistor. The feedback pin is configured to receive a feedback signal provided by the feedback circuit, and the control pin is configured to receive a control signal from a compensation circuit, thereby adjusting the duty cycle of the switching transistor according to the feedback signal and the control signal, and further stabilizing the output voltage. For example, the switching transistor may adopt a metal-oxide-semiconductor field-effect transistor.

In some embodiments, a first terminal of the energy storage inductor 191 of the step-down circuit 190 is connected to the switching transistor, and a second terminal of the energy storage inductor 191 is connected to the output side, and the energy storage inductor 191 is configured to store and transfer energy. A cathode terminal of a freewheeling diode 192 is connected to the first terminal of the energy storage inductor, and an anode terminal is grounded, and the freewheeling diode 192 is configured to provide a freewheeling path for the energy storage inductor 191 when the switching transistor is turned off, thus ensuring continuous power supply to the load. An end of the filter capacitor 193 is connected to the second terminal of the energy storage inductor, and the other end of the filter capacitor 193 is grounded, and the filter capacitor 193 is configured to filter the voltage at the output side to provide a stable DC output voltage.

In a case of reverse wiring, the input side reduces the input voltage to the desired output voltage through the control module 180 and the step-down circuit 190. The switching transistor is turned on and off at a high frequency under the driving of the control module 180, the energy storage inductor stores energy through electromagnetic induction, and cooperates with the freewheeling diode 192 and the filter capacitor 193 to convert a pulse signal into a stable DC signal that is output to the output side. The feedback circuit adjusts the control module ISO's control over the duty cycle of the switching transistor by detecting changes in the output voltage in real time, thereby achieving regulation of the output voltage.

In some embodiments, the control module 180 may adopt a high-voltage switching power supply control chip, which is integrated with a switching MOSFET, a PWM control, and a protection function. Of course, the control module 180 may also be implemented by a circuit, which is not specifically limited by embodiments of the present disclosure.

In some embodiments, the power supply circuit further includes a feedback circuit. The feedback circuit is coupled between an output terminal of the step-down circuit 190 and the feedback pin of the control module 180, configured to monitor the output voltage of the step-down circuit 190 in real time and feed a detection signal back to the control module 180. Specifically, the feedback circuit divides the output voltage through the voltage-dividing resistor, transmits a voltage-dividing signal to the feedback pin of the control module 180. After the feedback signal is compared with the internal reference voltage of the control module 180, an error signal is generated. Based on the error signal, the control module 180 dynamically adjusts the turn-on and turn-off duration of the switching transistor, thereby changing the duty cycle of the switching transistor to ensure the stability of the output voltage of the step-down circuit 190. For example, the voltage-dividing resistor includes a resistor 183 and a resistor 184.

In some embodiments, the power supply circuit further includes a compensation circuit, which is coupled to the control pin of the control module 180 and configured to compensate for the feedback signal, so as to improve stability and dynamic response performance of the power supply circuit. Specifically, the compensation circuit increases the response speed of the control module 180 by adjusting the gain and phase characteristics of the feedback signal, avoiding instability or oscillation caused by circuit delay or output fluctuations.

For example, the compensation circuit may adopt, for example, an RC compensation circuit. The RC compensation circuit includes a resistor 181 and a capacitor 182 connected in series, an end of the resistor 181 is connected to the control pin of the control module 180, and an end of the capacitor 182 is grounded. By adjusting the amplitude and phase of the feedback signal, the compensation circuit enables the control module 180 to respond more quickly and accurately to the changes of the output voltage, thereby ensuring that the output voltage is stabilized at the target value.

As shown in FIG. 6, in some embodiments, the normally closed switch 150 is coupled to the output terminal of the step-down circuit 190 and configured to receive the stable voltage signal after step-down. The output terminal of the step-down circuit 190 is coupled to the normally closed switch via a crystal diode, i.e., the crystal diode 151 is coupled in parallel with the normally closed switch 150. The input voltage is converted into a low-voltage DC signal suitable for driving a normally closed switch through the step-down process. The provision of the crystal diode 151 can provide a unidirectional conduction function to avoid damage or malfunction of the normally closed switch caused by voltage reversal.

For example, when the normally closed switch 150 is opened, a coil inside the normally closed switch 150 generates a back electromotive force. The crystal diode 151 is in the conducting state, which can provide a bleeding circuit for the current in the coil of the normally closed switch 150, allowing the current to decay slowly through the crystal diode 151, thereby dissipating the magnetic field energy in the coil of the normally closed switch 150, and thus preventing the normally closed switch from being damaged by the impact of the back electromotive force.

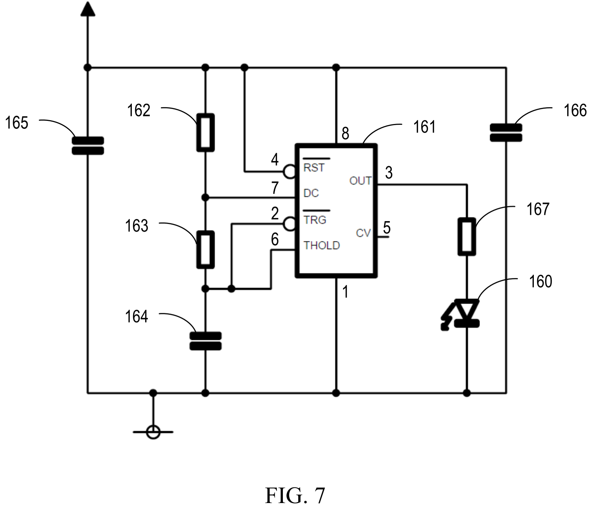

As shown in FIG. 7, in some embodiments, the anti-reverse protection circuit further includes a lamp driving circuit, which is coupled to the output terminal of the step-down circuit 190 and configured to receive the stable voltage signal after step-down. The lamp driving circuit generates a driving signal having a square-wave characteristic. The frequency and the duty cycle of the driving signal may be adjusted according to actual needs, which is not specifically limited by embodiments of the present disclosure. Through the driving signal, the lamp driving circuit can effectively drive the indicator light to flash, thereby providing an intuitive indication of the circuit status.

When the circuit is connected to the 12V power supply at the output terminal of the step-down circuit 190, the power supply supplies power to the entire lamp driving circuit after being filtered by the capacitor 165 and the capacitor 166. A chip 161 starts to operate, the capacitor 164 is charged through the resistor 162 and the resistor 163. When the voltage across the capacitor 164 reaches a threshold voltage of a threshold pin 6 (THOLD), an internal circuit of the chip 161 is activated, the output state of an output pin 3 (OUT) changes, and meanwhile, the capacitor 164 is discharged through a discharge pin 7 (DC). The charge-discharge process of the capacitor 164 is continuously cycled, so that a pulse signal with a certain frequency is generated at the output pin 3 (OUT). The pulse signal drives a light-emitting diode 160 through the resistor 167, causing the light-emitting diode 160 to flash at a certain frequency, thereby indicating the operation state of the circuit. During the entire operation, the values of the resistor 162, the resistor 163, and the capacitor 164 ensure the charge-discharge time constant of the capacitor 164, thereby ensuring the parameters such as the frequency and duty cycle of the output pulse signal. By adjusting the parameters of these elements, the characteristics of the output signal of the circuit can be adjusted to meet different application requirements.

When the input side is connected to the external power supply and the wiring is reverse, the step-down circuit 190 steps-down the input voltage and outputs a stable DC voltage, while driving the lamp driving circuit to operate. The lamp driving circuit receives the voltage signal provided by the step-down circuit 190, generates the driving signal having the square wave characteristic, and drives the indicator light to flash at a specific frequency, indicating that the anti-reverse protection circuit is in a reversed wiring state. If the input side is wired correctly, the anti-reverse protection circuit will cut off the output current, and drive the indicator light to enter different flashing modes or an off state through the lamp driving circuit, so as to indicate that the wiring is correct.

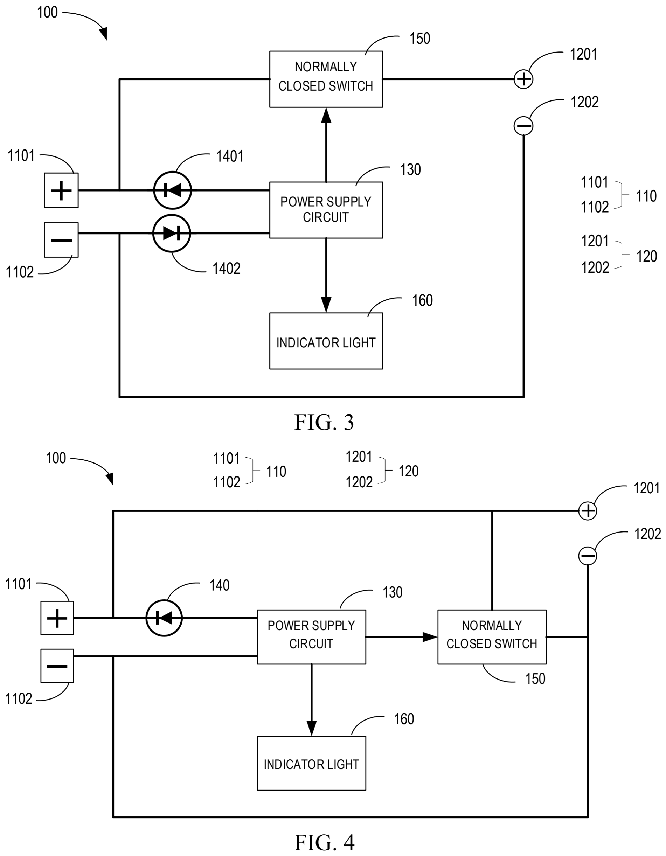

As shown in FIG. 3, in some embodiments, the anti-reverse protection circuit 100 includes a pair of unidirectional conduction circuits 140. The pair of unidirectional conduction circuits 140 includes a first unidirectional conduction circuit 1401 and a second unidirectional conduction circuit 1402.

Further, the first unidirectional conduction circuit 1401 includes a first anode terminal and a first cathode terminal. The first anode terminal is coupled to the power supply circuit 130; the first cathode terminal is coupled to the positive-pole input side 1101.

Further, the second unidirectional conduction circuit 1402 includes a second anode terminal and a second cathode terminal. The second anode terminal is coupled to the negative-pole input side 1102; the second cathode terminal is coupled to the power supply circuit 130.

If the positive and negative poles of the external power supply are correctly wired, the positive-pole input side 1101 is connected to the positive pole of the external power supply, and the negative-pole input side 1102 is connected to the negative pole of the external power supply. In this case, a voltage at the first cathode terminal of the first unidirectional conduction circuit 1401 is higher than that at the first anode terminal, and the first unidirectional conduction circuit 1401 is in a cut-off state; meanwhile, a voltage at the second anode terminal of the second unidirectional conduction circuit 1402 is lower than that at the second cathode terminal, and the second unidirectional conduction circuit 1402 is also in a cut-off state. Therefore, the power supply circuit 130 does not receive current, and the normally closed switch 150 remains in the conducting state, so that a conducting path between the positive-pole input side 1101 and the positive-pole output side 1201 is formed, and a conducting path between the negative-pole input side 1102 and the negative-pole output side 1202 is formed, thereby supplying power to the external device.

If the positive and negative poles of the external power supply are wired reversely, that is, the positive pole is connected to the negative-pole input side 1102, and the negative pole is connected to the positive-pole input side 1101, the voltage at the first cathode terminal of the first unidirectional conduction circuit 1401 is lower than that at the first anode terminal, the first unidirectional conduction circuit 1401 is in a conducting state, and at the same time, the voltage at the second anode terminal of the second unidirectional conduction circuit 1402 is higher than that at the second cathode terminal, the second unidirectional conduction circuit 1402 is in a conducting state, and the current from the external power supply is transmitted to the power supply circuit 130.

After the power supply circuit 130 receives the current, it identifies a wiring error of the external power, and controls the normally closed switch 150 to cut off the connection between the input side 110 and the output side 120, thereby cutting off power supply and avoiding damage to the external device.

In this way, the wiring status of the positive and negative poles of the external power supply can be determined, and rapid response to wiring error can be achieved.

As shown in FIGS. 1 to 3, in some embodiments, the normally closed switch 150 is arranged between the positive-pole input side 1101 and the positive-pole output side 1201 and configured to control a current path between the positive-pole input side 1101 and the positive-pole output side 1201.

If the positive and negative poles of the external power supply are correctly wired, the positive-pole input side 1101 receives the positive voltage of the external power supply, the power supply circuit 130 does not detect the wiring fault signal, and the normally closed switch 150 remains in the conducting state, enabling a conducting path to be formed between the positive-pole input side 1101 and the positive-pole output side 1201, thereby allowing the external power supply to supply power to the external device.

If the positive and negative poles of the external power supply are wired incorrectly, that is, the positive pole is connected to the negative-pole input side 1102, and the negative pole is connected to the positive-pole input side 1101, the power supply circuit 130 identifies the wiring error through the unidirectional conduction circuit 140, generates a control signal, and causes the normally closed switch 150 to open, thereby cutting off the current path between the positive-pole input side 1101 and the positive-pole output side 1201, preventing erroneous current from being transmitted to the external device, and avoiding damage to the external device or circuit faults caused by wiring error.

As shown in FIG. 4, in some embodiments, the normally closed switch 150 includes a first terminal and a second terminal. Further, the first terminal of the normally closed switch 150 is coupled between the positive-pole input side 1101 and the positive-pole output side 1201, and configured to control a current path between the positive-pole input side 1101 and the positive-pole output side 1201.

Further, the second terminal of the normally closed switch 150 is coupled between the negative-pole input side 1102 and the negative-pole output side 1202, and configured to control the current path between the negative-pole input side 1102 and the negative-pole output side 1202.

In a case where the positive and negative poles of the external power supply are wired correctly, the positive-pole input side 1101 is connected to the positive pole of the external power supply, the negative-pole input side 1102 is connected to the negative pole of the external power supply, and the power supply circuit 130 does not detect the fault signal. At this point, the normally closed switch 150 remains in a conducting state, and the first terminal and the second terminal of the normally closed switch 150 respectively form conducting paths, so that the positive-pole input side 1101 is connected to the positive-pole output side 1201, and the negative-pole input side 1102 is connected to the negative-pole output side 1202, thereby enabling the external power supply to supply power to the external device.

If the positive and negative poles of the external power supply are wired incorrectly, that is, the positive pole is connected to the negative-pole input side 1102, and the negative pole is connected to the positive-pole input side 1101, the power supply circuit 130 identifies incorrect wiring status through the unidirectional conduction circuit 140 and generates a control signal. The control signal drives the normally closed switch 150 to act, to cut off the conducting path between the first terminal and the second terminal. At this point, the connection between the positive-pole input side 1101 and the positive-pole output side 1201, and the connection between the negative-pole input side 1102 and the negative-pole output side 1202, are both cut off, preventing current from being transmitted to the external device, thereby avoiding damage to the external device.

Embodiments of the present disclosure have been described above, which are illustrative, not exhaustive, and are not limited to embodiments disclosed. Many modifications and variations will be apparent to those of ordinary skill in the art without departing from the scope of the illustrated embodiments. The selection of the terms used herein is intended to explain the principles of embodiments, practical applications, or technical improvements in the marketplace, or to enable others of ordinary skill in the art to understand the various embodiments disclosed herein.

## Claims

1. An anti-reverse protection circuit for a DC socket, **characterized by** comprising:
an input side (110) adapted to be electrically connected to an external power supply;
an output side (120) adapted to be electrically connected to an external device;
a power supply circuit (130) comprising a control module (180) and a step-down circuit (190), wherein the control module (180) is coupled to the input side (110) and the step-down circuit (190);
a unidirectional conduction circuit (140) coupled between the input side (110) and the power supply circuit (130), and adapted to become open when the input side (110) is correctly wired to the external power supply, to prevent the external power supply from supplying power to the power supply circuit (130), and adapted to become closed when the input side (110) is reverse-wired to the external power supply, to allow the external power supply to supply power to the power supply circuit (130); and
a normally closed switch (150) arranged between the input side (110) and the output side (120), and coupled to the step-down circuit (190) of the power supply circuit (130), wherein when the external power supply is correctly wired, the normally closed switch (150) is adapted to be in a conducting state to allow a circuit between the input side (110) and the output side (120) to be a conducting circuit, and when the external power supply is reversely wired and supplies power to the step-down circuit (190) of the power supply circuit (130), the normally closed switch (150) is opened to cut off the circuit between the input side (110) and the output side (120).

2. The anti-reverse protection circuit of claim 1, **characterized in that** the input side (110) comprises a positive-pole input side (1101) and a negative-pole input side (1102), and
the output side (120) comprises a positive-pole output side (1201) and a negative-pole output side (1202); and
the unidirectional conduction circuit (140) comprises:
an anode terminal coupled to the power supply circuit (130); and
a cathode terminal coupled to the positive-pole input side (1101).

3. The anti-reverse protection circuit of claim 1, **characterized in that** the input side (110) comprises a positive-pole input side (1101) and a negative-pole input side (1102), and
the output side (120) comprises a positive-pole output side (1201) and a negative-pole output side (1202); and
the unidirectional conduction circuit (140) comprises:
an anode terminal coupled to the negative-pole input side (1102); and
a cathode terminal coupled to the power supply circuit (130).

4. The anti-reverse protection circuit of claim 1, **characterized in that** the input side (110) comprises a positive-pole input side (1101) and a negative-pole input side (1102), and
the output side (120) comprises a positive-pole output side (1201) and a negative-pole output side (1202); and
a first unidirectional conduction circuit (1401) of a pair of unidirectional conduction circuits (140) comprises:
a first anode terminal coupled to the power supply circuit (130); and
a first cathode terminal coupled to the positive-pole input side (1101), and
a second unidirectional conduction circuit (1402) of the pair of unidirectional conduction circuits (140) comprises:
a second anode terminal coupled to the negative-pole input side (1102); and
a second cathode terminal coupled to the power supply circuit (130).

5. The anti-reverse protection circuit of any of claims 1 to 4, **characterized in that**
the normally closed switch (150) is coupled between the positive-pole input side (1101) and the positive-pole output side (1201); and/or
a first terminal of the normally closed switch (150) is coupled between the positive-pole input side (1101) and the positive-pole output side (1201), and a second terminal of the normally closed switch (150) is coupled between the negative-pole input side (1102) and the negative-pole output side (1202).

6. The anti-reverse protection circuit of any of claims 1 to 5, **characterized in that**
the normally closed switch (150) comprises a normally closed relay; and/or
the unidirectional conduction circuit (140) comprises a crystal diode.

7. The anti-reverse protection circuit of any of claims 1 to 6, **characterized in that** when the power supply circuit (130) is powered, the control module (180) regulates an output voltage of the step-down circuit (190).

8. The anti-reverse protection circuit of any of claims 1 to 7, **characterized in that** the control module (180) comprises:
a switching transistor connected to the step-down circuit (190).

9. The anti-reverse protection circuit of claim 8, **characterized in that** the step-down circuit (190) comprises:
an energy storage inductor (191), a first terminal of the energy storage inductor (191) being connected to the switching transistor, and a second terminal of the energy storage inductor (191) being connected to the output side (120);
a freewheeling diode (192), a cathode terminal of the freewheeling diode (192) being connected to the first terminal of the energy storage inductor (191), and an anode terminal of the freewheeling diode (192) being grounded; and
a filter capacitor (193), an end of the filter capacitor (193) being connected to the second terminal of the energy storage inductor (191), and the other end of the filter capacitor (193) being grounded.

10. The anti-reverse protection circuit of any of claims 1 to 9, **characterized in that** the power supply circuit (130) further comprises a feedback circuit coupled between the step-down circuit (190) and the control module (180), and
the feedback circuit comprises a voltage-dividing resistor adapted to divide an output voltage of the step-down circuit (190) and feed a voltage-dividing signal back to the control module (180).

11. The anti-reverse protection circuit of claim 10, **characterized in that** the power supply circuit further comprises a compensation circuit coupled to the control module (180) and adapted to compensate for a feedback signal of the feedback circuit.

12. The anti-reverse protection circuit of any of claims 1 to 11, **characterized in that**
the step-down circuit (190) is coupled to the normally closed switch (150) through a crystal diode (151); and/or
the anti-reverse protection circuit further comprises a lamp driving circuit coupled to the step-down circuit (190), wherein a driving signal of the lamp driving circuit has a square-wave characteristic and is adapted to drive an indicator light (160) to flash.

13. An anti-reverse protection assembly for a DC socket, **characterized by** comprising:
the anti-reverse protection circuit of any of claims 1 to 12;
a wiring terminal coupled to the input side (110) of the anti-reverse protection circuit; and
a socket sleeve coupled to the output side (120) of the anti-reverse protection circuit.

14. The anti-reverse protection assembly of claim 13, **characterized by** further comprising:
an indicator light (160) coupled to the step-down circuit (190) of the power supply circuit (130) of the anti-reverse protection circuit, and adapted to enter an on state when the input side (110) of the anti-reverse protection circuit is reversely wired and the external power supply supplies power to the power supply circuit (130) of the anti-reverse protection circuit.

15. A DC socket, **characterized by** comprising:
a housing; and
the anti-reverse protection assembly of claim 13 or 14 coupled to the housing, and adapted to be electrically connected to an external device.
